# EUROPÄISCHE PATENTSCHRIFT

(11) **EP 2 921 042 B1**
(45) Veröffentlichungstag und Bekanntmachung des Hinweises auf die Patenterteilung: **31.03.2021**
(21) Anmeldenummer: 15154983.9
(22) Anmeldetag: 13.02.2015
(51) Int. Cl.: A01D 41/127

(54) **Erntemaschine mit vorausschauender Vortriebsgeschwindigkeitsvorgabe**
Harvesting machine with a predictive propulsion speed control
Moissonneuse dotée d'un réglage de la vitesse de propulsion anticipé

(30) Priorität: 20.03.2014 DE 102014205233
(43) Veröffentlichungstag der Anmeldung: 23.09.2015
(73) Patentinhaber: Deere & Company, Moline, IL 61265 (US)
(72) Erfinder: Münch, Philipp, 67663 Kaiserslautern (DE); Jung, Benedikt, 67655 Kaiserslautern (DE)
(74) Vertreter: Holst, Sönke

(56) Entgegenhaltungen:
- EP-A1- 1 243 173
- EP-A1- 2 586 286
- EP-A1- 2 803 256
- DE-A1- 10 130 665

## Beschreibung

Die Erfindung betrifft ein Verfahren und eine Anordnung zur Geschwindigkeitskontrolle einer Erntemaschine.

### Stand der Technik

Bei landwirtschaftlichen Erntemaschinen hängt der Durchsatz proportional von der jeweiligen Vortriebsgeschwindigkeit der Erntemaschine ab. Um die Erntemaschine möglichst gut auszulasten und effektiv auszunutzen, sind Systeme bekannt, um die Vortriebsgeschwindigkeit selbsttätig im Sinne einer Einhaltung eines gewünschten Erntegutdurchsatzes einzustellen und den Bediener von der Aufgabe der Geschwindigkeitsvorgabe zu entlasten.

Die Dichte des Ernteguts kann auf einem Feld mehr oder weniger stark variieren, was entsprechende Änderungen der Vortriebsgeschwindigkeit zur Folge hat. Die Erfassung der Dichte, insbesondere wenn sie erst an Bord der Erntemaschine mittels eines Durchsatzsensors erfolgt (s. beispielsweise DE 1 199 039 B), und die Geschwindigkeitsanpassung in Folge einer Dichteänderung bedingen jedoch eine gewisse Reaktionszeit, die dazu führt, dass die Geschwindigkeit nur zeitlich verzögert an eine Änderung der Dichte des Ernteguts auf dem Feld angepasst wird. Dies ist besonders kritisch, wenn die Dichte plötzlich stark ansteigt, da dann sogar eine Überlastung oder Verstopfung der Erntemaschine die Folge sein kann.

Im Stand der Technik wurden Lösungen vorgeschlagen, bei denen die Dichte des Ernteguts auf dem Feld oder ein davon abhängiger Wert vorausschauend bestimmt und daraus die Vortriebsgeschwindigkeitsvorgabe in der Weise abgeleitet wird, dass die Erntemaschine beim Erreichen einer bestimmten Stelle des Feldes bereits mit der geeigneten Geschwindigkeit fährt, sei es mittels einer bei einem vorherigen Erntevorgang erzeugten Karte (DE 44 31 824 C1) oder mittels eines vorausschauend arbeitenden Sensors zur Erfassung der Bestandsdichte (DE 101 30 665 A1). Die EP 2 586 286 A1 beschreibt eine Erntemaschine mit einem vorausschauenden Sensor, aus dessen Signalen statistische Parameter abgeleitet werden und im Zusammenhang mit den Signalen der Messeinrichtung zur Berechnung der Vortriebsgeschwindigkeit verwendet werden. In der nachveröffentlichten EP 2 803 256 A1 erfolgt ebenfalls eine vorausschauende Bestimmung des zu erwartenden Erntegutdurchsatzes und eine darauf basierende Steuerung der Vortriebsgeschwindigkeit, wobei zusätzlich der tatsächliche Massendurchsatz der Erntemaschine bestimmt, mit einem erwarteten Massendurchsatz verglichen und das Ergebnis des Vergleichs als Rückkopplungswert bei der Vortriebsgeschwindigkeitsbestimmung verwendet wird.

Diese Lösungen passen die Geschwindigkeit der Erntemaschine an den erwarteten Durchsatz an, weisen jedoch den Nachteil auf, dass kontinuierlich mehr oder weniger starke Beschleunigungen der Erntemaschine auftreten, die sich jedenfalls nach längeren Arbeitstagen als anstrengend und unkomfortabel für den Fahrer bemerkbar machen.

Es ist zwar an sich bekannt, die verfügbare Beschleunigung einer Erntemaschine zwecks Verbesserung des Komforts des Bedieners zu begrenzen, indem die Verstellgeschwindigkeit eines die Vortriebsgeschwindigkeit definierenden Aktors hydraulisch limitiert wird (DE 10 2006 037 631 A1), jedoch würde eine Anwendung einer derartigen Begrenzung bei einer vorausschauend geschwindigkeitsgesteuerten Erntemaschine wieder zu dem Problem führen, dass der Erntegutdurchsatz nicht in allen Fällen mit dem Sollwert übereinstimmt. Insbesondere kann der Fall auftreten, dass bei plötzlich stark ansteigender Erntegutdichte nicht hinreichend stark gebremst wird, sodass die Erntemaschine verstopft oder überlastet wird.

### Aufgabe

Die der Erfindung zu Grunde liegende Aufgabe wird darin gesehen, eine Erntemaschine mit einer vorausschauend arbeitenden Geschwindigkeitsvorgabe bereitzustellen, bei der einerseits die im Betrieb auftretenden Beschleunigungen auf ein komfortables Maß begrenzt, andererseits sichergestellt ist, dass ein gewünschter Durchsatzwert möglichst gut eingehalten, jedoch nicht überschritten wird.

### Lösung

Die vorliegende Erfindung wird durch die Patentansprüche definiert.

Ein Verfahren zur Geschwindigkeitskontrolle einer Erntemaschine, die mit einer Vortriebsgeschwindigkeit in einer Vorwärtsrichtung über ein Feld bewegbar ist und dabei Erntegut aufnimmt, umfasst folgende Schritte, während eine entsprechende Anordnung betreibbar ist, diese Schritte durchzuführen:
vorausschauendes Ermitteln der Dichte eines Erntegutbestands auf dem Feld oder eines von der Dichte des Erntegutbestands auf dem Feld abhängigen Wertes,
Vorausplanen eines Geschwindigkeitsvorgabesignals für die Erntemaschine im Sinne einer fortdauernden Einhaltung eines gewünschten Durchsatzes der Erntemaschine,
und Kontrolle der Geschwindigkeit der Erntemaschine basierend auf dem Geschwindigkeitsvorgabesignal, wobei dass die Planungseinrichtung betreibbar ist, beim Vorausplanen des Geschwindigkeitsvorgabesignals die Absolutbeträge der aus dem Geschwindigkeitsvorgabesignal resultierenden Beschleunigungen der Erntemaschine auf einen festgelegten Maximalwert zu begrenzen, und dass die Planungseinrichtung betreibbar ist, einen ersten Schritt durchzuführen, in dem das Geschwindigkeitssignal nur basierend auf der Dichte des Erntegutbestands oder dem davon abhängigen Wert geplant wird und einen zweiten Schritt durchzuführen, in dem eine Neuplanung erfolgt, falls der Betrag der im ersten Schritt geplanten Beschleunigung der Erntemaschine den festgelegten Maximalwert übersteigt.

Mit anderen Worten erfolgt eine Planung der Geschwindigkeit, die zwei Randbedingungen berücksichtigt: der gewünschte Durchsatz soll zumindest etwa eingehalten, insbesondere eine Überschreitung einer vorgesehenen Menge des Durchsatzes vermieden werden, jedoch soll der Betrag der Beschleunigung der Erntemaschine nicht über eine festgelegte Komfortgrenze hinaus ansteigen. Dadurch erreicht man einen Komfortgewinn für den Bediener der Erntemaschine, ohne die andere Randbedingung der Einhaltung des gewünschten Gutdurchsatzes zumindest in einem groben, vorgebbaren Maß zu verletzen. Der gewünschte Gutdurchsatz kann fest vorgegeben sein oder durch einen Bediener ausgewählt werden, beispielsweise indem er einen Zielwert für den Durchsatz oder im Fall eines Mähdreschers eines Verlustwerts eingibt, der wiederum den Durchsatz bestimmt.

Das Vorausplanen des Geschwindigkeitsvorgabesignals umfasst einen ersten Schritt, in dem das Geschwindigkeitssignal nur basierend auf der Dichte des Erntegutbestands oder einem davon abhängigen Wert geplant wird und einen zweiten Schritt, in dem eine Neuplanung erfolgt, falls der Betrag der im ersten Schritt geplanten Beschleunigung der Erntemaschine einen festgelegten Maximalwert übersteigt. Dadurch erübrigt sich ein größerer Rechenaufwand, wenn die Bestandsdichte relativ homogen ist. Anderenfalls wird die ursprüngliche Planung im Sinne einer Einhaltung des Grenzwerts der Beschleunigung modifiziert.

Beim Vorausplanen des Geschwindigkeitsvorgabesignals kann weiterhin eine Maximalgeschwindigkeit der Erntemaschine berücksichtigt werden. Das Vorausplanen des Geschwindigkeitsvorgabesignals kann dazu einen Schritt umfassen, in dem eine Neuplanung erfolgt, falls die im ersten Schritt geplante Geschwindigkeit der Erntemaschine eine festgelegte Maximalgeschwindigkeit der Erntemaschine übersteigt.

Das Vorausplanen des Geschwindigkeitsvorgabesignals kann ein zeitliches Verschieben einer Geschwindigkeitsänderung nach vorn oder hinten umfassen, um ein Überschreiten eines Maximalwerts der Beschleunigung und/oder Geschwindigkeit zu verhindern. Demnach erfolgt die Geschwindigkeitsänderung, wenn erforderlich, früher als ursprünglich geplant, um eine anderenfalls durchzuführende Beschleunigung oder Verzögerung abzumindern. Aufgrund der begrenzten Geschwindigkeit bzw. Verzögerung kann das Ende des Geschwindigkeitsänderungsmanövers analog zeitlich nach hinten verlegt werden. Da dieser Vorgang länger dauert als ursprünglich geplant war, werden der Neuplanung zeitlich nachfolgende Geschwindigkeitsvorgabesignale zweckmäßigerweise zeitlich nach hinten verschoben, damit die erwähnten, der Neuplanung folgenden Geschwindigkeitsvorgabesignale auch an den räumlichen Stellen zur Anwendung kommen, für die sie ursprünglich geplant waren.

Bei der Neuplanung eines ursprünglich eine maximale Beschleunigung oder Geschwindigkeit überschreitenden Geschwindigkeitssignals kann eine maximale Beschleunigung oder Geschwindigkeit verwendet werden.

Die erfindungsgemäße Anordnung kann an selbstfahrenden oder von einem Fahrzeug gezogenen oder daran angebauten Erntemaschinen Verwendung finden, beispielsweise Mähdreschern, gezogenen oder selbstfahrenden Ballenpressen oder Feldhäckslern.

Im Falle einer durch ein Zugfahrzeug gezogenen oder daran angebauten Erntemaschine, wie einer Ballenpresse oder eines Feldhäckslers, wird die Geschwindigkeit der Erntemaschine gesteuert, indem die Fahrgeschwindigkeit des Zugfahrzeugs kontrolliert wird. Dazu kann eine Steuerung der Erntemaschine über einen Bus mit einer Steuerung des Zugfahrzeugs kommunizieren, vgl. EP 1 153 538 A2. Das vorausschauende Ermitteln der Dichte des Erntegutbestands auf dem Feld kann durch mit der Steuerung der Erntemaschine und/oder der Steuerung des Zugfahrzeugs verbundene Elemente erfolgen. Analog kann die Vorgabe der Fahrgeschwindigkeit des Zugfahrzeugs durch die Steuerung der Erntemaschine und/oder die Steuerung des Zugfahrzeugs vorgenommen werden. Demnach kann bei einer Kombination aus einem Zugfahrzeug und einer gezogenen oder angebauten Erntemaschine die ganze Kombination als Erntemaschine im Sinne des vorliegenden Schutzrechts betrachtet werden.

### Ausführungsbeispiel

In den Zeichnungen ist ein nachfolgend näher beschriebenes Ausführungsbeispiel der Erfindung dargestellt. Es zeigt:
- Fig. 1: eine halbschematische Seitenansicht eines landwirtschaftlichen Mähdreschers,
- Fig. 2: ein Schema eines erfindungsgemäßen Durchsatzsteuerungssystems,
- Fig. 3: ein Flussdiagramm, nach dem das Geschwindigkeitsvorgabesystem arbeitet.
- Fig. 4: ein Diagramm, bei dem eine geplante Geschwindigkeit einen Grenzwert überschreitet,
- Fig. 5: ein Diagramm nach Neuplanung des Geschwindigkeitsverlaufs der Figur 4,
- Fig. 6: ein Flussdiagramm für die Neuplanung des Geschwindigkeitsverlaufs,
- Fig. 7: ein Diagramm, bei dem die geplante Beschleunigung Maximalwerte unterschreitet,
- Fig. 8: ein Diagramm zur Neuplanung der Beschleunigung,
- Fig. 9: ein Diagramm zur Neuplanung der Beschleunigung,
- Fig. 10: ein Diagramm zur Neuplanung der Geschwindigkeit, und
- Fig. 11: ein Flussdiagramm für die Neuplanung des Beschleunigungs- und Geschwindigkeitsverlaufs.

### Erntemaschine

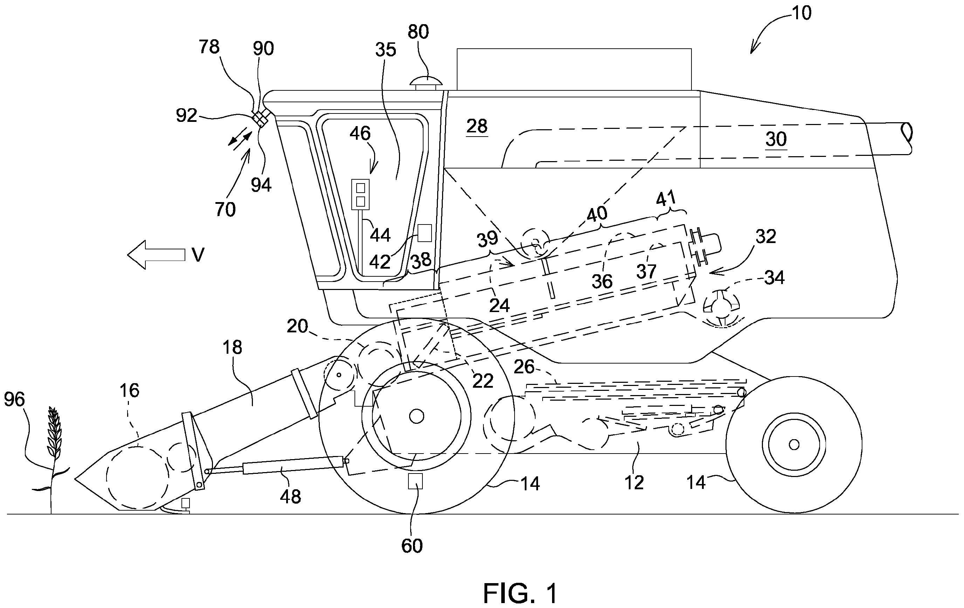

Die Figur 1 zeigt einen als Beispiel für eine Erntemaschine dienenden, landwirtschaftlichen Mähdrescher 10 mit einer tragenden Struktur 12, die mit im Eingriff mit dem Erdboden stehenden Rädern 14 versehen ist. Obwohl der Mähdrescher 10 mit Rädern dargestellt ist, könnte er auch mit zwei oder vier Raupenlaufwerken versehen sein. Ein Schneidwerk 16 wird zum Ernten von Erntegut verwendet und führt es einem Schrägförderer 18 zu. Der Schrägförderer 18 enthält eine Fördereinrichtung, um das geerntete Gut einer Leittrommel 20 zuzuführen. Die Leittrommel 20 führt das Gut nach oben durch einen Einlassübergangsabschnitt 22 hindurch und einer drehbaren, zum Dreschen und Trennen eingerichteten Gutbearbeitungseinrichtung 24 zu. Die dargestellte Gutbearbeitungseinrichtung 24 ist im Mähdrescher axial angeordnet, sie könnte aber auch in anderen Orientierungen relativ zur Längsachse des Mähdreschers 10 angeordnet sein. Obwohl die vorliegende Erfindung anhand einer Gutbearbeitungseinrichtung 24 mit einem Rotor beschrieben wird, könnte sie auch an einem Mähdrescher 10 mit einer konventionellen, quer angeordneten Dreschtrommel, die mit einem Dreschkorb zusammenwirkt, verwendet werden.

Die Gutbearbeitungseinrichtung 24 drischt und trennt das geerntete Gut. Das Korn und die Spreu fallen durch Roste am Boden der Gutbearbeitungseinrichtung 24 in ein Reinigungssystem 26. Das Reinigungssystem 26 entfernt die Spreu und führt das saubere Korn einem (nicht gezeigten) Elevator für sauberes Korn zu. Der Elevator für sauberes Korn legt das Korn in einem Korntank 28 ab. Das saubere Korn im Korntank 28 kann durch einen Entladeschneckenförderer 30 einem Lastwagen oder Anhänger zugeführt werden.

Ausgedroschenes, vom Korn befreites Stroh wird von der Gutbearbeitungseinrichtung 24 durch einen Auslass 32 einer Auswurftrommel 34 zugeführt. Die Auswurftrommel 34 stößt das Stroh wiederum an der Rückseite des Mähdreschers 10 aus. Es ist anzumerken, dass die Auswurftrommel 34 das vom Korn befreite Gut auch direkt einem Strohhäcksler zuführen könnte. Der Betrieb des Mähdreschers 10 wird von einer Bedienerkabine 35 aus gesteuert.

Die Gutbearbeitungseinrichtung 24 umfasst ein zylindrisches Rotorgehäuse 36 und einen im Rotorgehäuse 36 angeordneten, drehbaren Rotor 37. Der vordere Teil des Rotors 37 und das Rotorgehäuse 36 definieren einen Beschickungsabschnitt 38. Stromab des Beschickungsabschnitts 38 sind ein Dreschabschnitt 39, ein Trennabschnitt 40 und ein Auslassabschnitt 41. Der Rotor 37 ist im Beschickungsabschnitt 38 mit einer konischen Rotortrommel versehen, die wendelförmige Beschickungselemente zum Eingreifen in Gut aufweist, das sie von der Leittrommel 20 und vom Einlassübergangsbereich 22 erhält. Unmittelbar stromab des Beschickungsabschnitts 38 befindet sich der Dreschabschnitt 39. Im Dreschabschnitt 39 weist der Rotor 37 eine zylindrische Rotortrommel auf, die mit einer Anzahl von Dreschelementen versehen ist, um das vom Beschickungsabschnitt 38 erhaltene Gut zu dreschen. Stromab des Dreschabschnitts 39 befindet sich der Trennabschnitt 40, in dem das im gedroschenen Gut noch enthaltene Korn freigesetzt wird und durch ein bodenseitiges Rost im Rotorgehäuse 36 hindurch in das Reinigungssystem 26 fällt. Der Trennabschnitt 40 geht in den Auslassabschnitt 41 über, in dem das vom Korn befreite Gut (Stroh) aus der Gutbearbeitungseinrichtung 24 ausgestoßen wird.

### Vortriebsgeschwindigkeitssteuerung: Aufbau

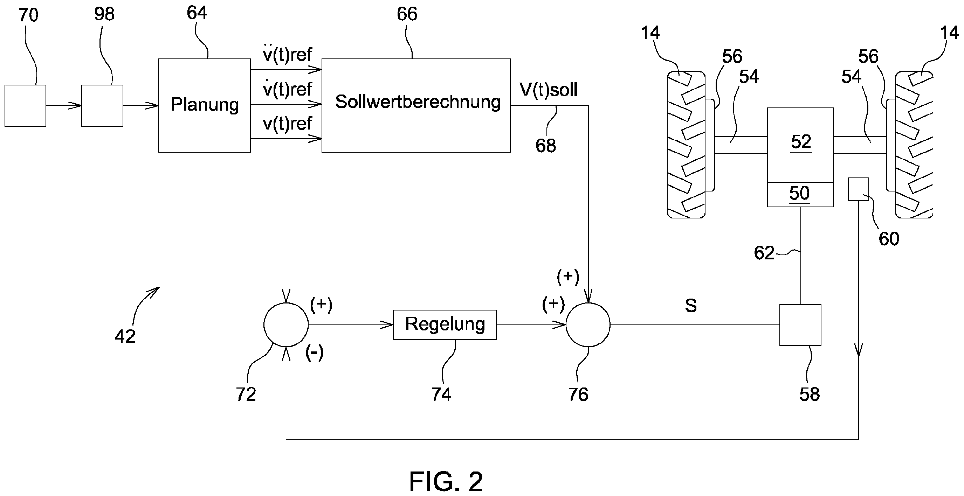

Die vorderen Räder 14 des Mähdreschers 10 werden durch ein hydrostatisches Getriebe 50 angetrieben, wie in der Figur 2 dargestellt. Das hydrostatische Getriebe 50 wird auf konventionelle Weise durch einen nicht gezeigten Verbrennungsmotor angetrieben. Das hydrostatische Getriebe 50 treibt wiederum ein Schaltgetriebe 52 an. Zwei treibende Wellen 54 erstrecken sich vom Schaltgetriebe 52 nach außen und treiben Endantriebe 56 der vorderen Räder 14 an. Das hydrostatische Getriebe 50 umfasst eine Pumpeneinheit und eine Motoreinheit. Die Pumpeneinheit und/oder die Motoreinheit sind mit einstellbaren Taumelplatten ausgestattet. Die einstellbaren Taumelplatten steuern die Ausgangsgeschwindigkeit des Getriebes 50 und dessen Drehrichtung. Elektromagnetisch gesteuerte Steuerventile 58 steuern die Positionen der Taumelplatten. Die lenkbaren hinteren Räder 14 können auch durch Radmotore angetrieben werden, die direkt an den Rädern 14 befestigt sind. Die Geschwindigkeit der Radmotore kann durch das unten beschriebene Durchsatzsteuerungssystem gesteuert werden.

Eine elektronische Steuerung 42 steuert die Vortriebsgeschwindigkeit v des Mähdreschers 10. Das bedeutet, dass die elektronische Steuerung 42 die Vorwärtsgeschwindigkeit (Erntegeschwindigkeit) des Mähdreschers 10 durch ein Einstellen der Position der Taumelplatten des hydrostatischen Getriebes 50 einstellt, indem der Betrieb der elektromagnetisch betätigten Steuerventile 58 über eine Leitung 62 gesteuert wird. Eine manuelle Vorgabe der Vortriebsgeschwindigkeit z.B. für das Vorgewende oder eine Straßenfahrt ist mittels eines Fahrhebels 44 möglich, an dessen oberen Ende Bedienelemente 46 angeordnet sind, die z.B. zur Vorgabe der Höhe des Erntevorsatzes 16 dienen, die mittels eines Aktors 48 verstellt wird.

Durch eine weitere Leitung ist die Steuerung 42 mit einem berührungslos arbeitenden Entfernungsmesser 70 verbunden, der in diesem Ausführungsbeispiel als Anordnung zur vorausschauenden, berührungslosen Erfassung eines vor der Erntemaschine 10 stehenden Erntegutbestands 96 und zur Bereitstellung von Daten hinsichtlich eines zu erwartenden Massendurchsatzes in der Erntemaschine 10 dient und einen Sender 92 sowie einen Empfänger 94 umfasst und an der Oberseite der Kabine 35 befestigt ist. Der Sender 92 strahlt im Betrieb elektromagnetische Wellen im Radarfrequenzbereich schräg nach vorn auf den Erntegutbestand 96 auf dem Feld vor dem Mähdrescher 10 ab. Der Empfänger 94 empfängt vom Erntegutbestand 96 und ggf. vom Erdboden reflektierte Wellen. Eine Auswertungseinheit 98, die auch in die Steuerung 42 integriert werden könnte, evaluiert die Laufzeiten und Amplituden der vom Empfänger 94 empfangenen Wellen. Vorzugsweise ist die Polarisation der vom Sender 92 abgestrahlten Wellen vertikal und der Empfänger 94 empfängt getrennt voneinander horizontal und vertikal polarisierte Wellen. Eine geeignete Frequenz liegt bei 77 GHz. Der Entfernungsmesser 90 kann um eine etwa vertikale bzw. schräg nach oben und vorn geneigte Achse 78 hin und her schwingen, um den Erntegutbestand 96 über die Schnittbreite des Erntevorsatzes 16 in seitlicher Richtung abzutasten, oder eine geeigneten Anzahl an Sendern 92 und Empfängern 94 umfassen, die seitlich nebeneinander angeordnet sind, um gleichzeitig eine Anzahl an Laufzeiten und Amplituden über die Schnittbreite des Erntevorsatzes 16 zu gewinnen.

Die Steuerung 42 ist auch mit einem Positionsbestimmungssystem 80 verbunden, das Signale von Satelliten (z.B. GPS, Galileo und/oder Glonass) empfängt und die aktuelle Position des Mähdreschers 10 bestimmt. Diese Position kann genutzt werden, um aus einer Karte Daten hinsichtlich eines zu erwartenden Massendurchsatzes in der Erntemaschine 10 zu evaluieren, sei es von einem vorherigen Erntevorgang und/oder von einer vorherigen Überfahrung eines benachbarten Streifens des Felds.

Ein Geschwindigkeitssensor 60 führt der Steuerung 42 ein Geschwindigkeitssignal hinsichtlich der aktuellen Vortriebsgeschwindigkeit v des Mähdreschers 10 zu. Der Geschwindigkeitssensor 60 kann die Drehzahl einer der Wellen 54 erfassen oder als Radarsensor ausgeführt sein und die Geschwindigkeit des Mähdreschers 10 über dem Erdboden erfassen.

Die Figur 2 zeigt den Aufbau der Steuerung 42 im Detail. Sie umfasst neben dem Entfernungsmesser 70 und der Auswertungseinheit 98 eine Planungseinheit 64, welche die Geschwindigkeit des Mähdreschers 10 vorausschauend plant. Die Planungseinheit 64 erstellt anhand der Signale der Auswertungseinheit 98 anhand einer unten erläuterten Vorgehensweise von der Zeit t abhängige Referenzwerte für die Geschwindigkeit (v(t) ref) für den Mähdrescher 10, die sich über die Zeit ändern können, abhängig von der Dichte des Erntegutbestands 96 auf dem Feld. Als Ausgabesignale der Planungseinheit stehen neben dem jeweiligen Referenzwert für die Geschwindigkeit (v(t) ref) auch dessen erste und zweite zeitliche Ableitung am Ausgang der Planungseinheit 64 bereit. Sie kann auch höhere Ableitungen bereitstellen, abhängig von der in einer Sollwertberechnungseinheit 66 verwendeten, die Fahrdynamik des Mähdreschers 10 repräsentierenden Übertragungsfunktion.

Diese drei Referenzwerte werden der Sollwertberechnungseinheit 66 zugeführt, die an ihrem Ausgang 68 einen Sollwert (V(t) soll) für die Geschwindigkeit abgibt. Die Sollwertberechnungseinheit 66 dient dazu, den Referenzwert derart in den Sollwert für die Geschwindigkeit umzurechnen, dass die Fahrdynamik (Übertragungsfunktion) des Mähdreschers 10 Berücksichtigung findet, d.h. sein Beschleunigungs- und Verzögerungsverhalten. Dazu können der Referenzwert für die Geschwindigkeit (v(t) ref) und dessen erste und zweite zeitliche Ableitung jeweils mit unterschiedlichen Konstanten multipliziert und die Produkte addiert werden. Diese Konstanten können fest vorgegeben sein oder insgesamt oder zum Teil selbsttätig an den jeweiligen Beladungszustand des Mähdreschers 10 angepasst werden, insbesondere an den (sensorisch erfassten) Füllstand im Korntank 28.

Der Referenzwert für die Geschwindigkeit (v(t) ref) wird auch einem Subtrahierer 72 zugefügt, welcher von diesem Referenzwert die tatsächliche Geschwindigkeit, die mit dem Geschwindigkeitssensor 60 erfasst wird, abzieht. Diese Differenz ist ein Regeleingangswert für eine Regelschaltung 74, zu deren Ausgangswert ein Addierer 76 den Sollwert am Ausgang 68 der Sollwertberechnungseinheit 66 addiert. Das Ergebnis des Addierers 76 wird dann als Stellwert S den Steuerventilen 58 des Fahrantriebs zugeführt. Man erhält demnach eine so genannte Vorsteuerung, bei welcher die Stellgröße v(t) ref mit einem von den Zuständen der Regelstrecke unabhängigen Wert v(t) soll beaufschlagt wird, der eine Berücksichtigung des aufgrund des Sollwertverlaufs zu erwartenden Stellgrößen-Bedarfs ermöglicht.

### Vortriebsgeschwindigkeitssteuerung: Wirkungsweise

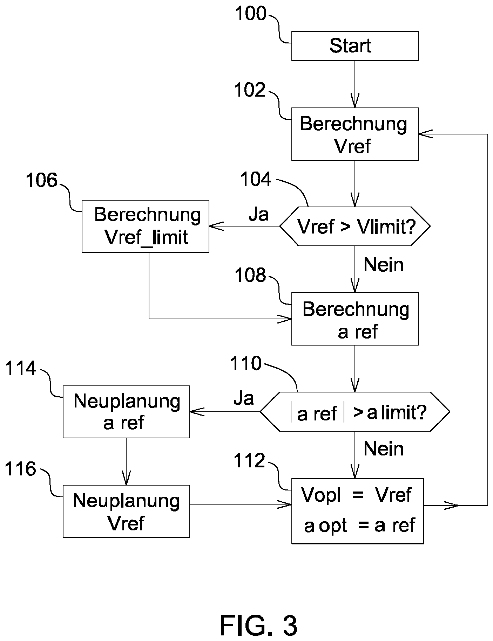

Die Wirkungsweise der Planungseinheit 64 wird im Folgenden anhand der Figur 3 erläutert. Nach dem Start im Schritt 100 werden in einem ersten Schritt 102 zunächst Referenzwerte für die Geschwindigkeit v(t) ref für einen gewissen Zeitraum bzw. Weg vor dem Mähdrescher 10 berechnet, basierend auf den Signalen der Auswertungseinheit 98. Hierzu sei auf den Stand der Technik nach DE 101 30 665 A1 verwiesen. Alternativ oder zusätzlich können die Referenzwerte für die Geschwindigkeit v(t) ref anhand einer abgespeicherten Karte, in welcher zu erwartende Durchsätze georeferenziert abgespeichert sind, die anhand der Signale eines Positionsbestimmungssystems 80 ausgelesen wird, bestimmt werden. Hierzu sei auf den Stand der Technik nach DE 44 31 824 C1verwiesen. Man erhält als Ergebnis des Schritts 102 somit einen Geschwindigkeitsverlauf v(t) ref, bei dessen Einhaltung der Mähdrescher 10 mit (im Rahmen der Mess- und Regelgenauigkeit) konstantem Durchsatz beaufschlagt wird. Bei kleinen Bestandsdichten würde der Mähdrescher 10 auf sehr hohe Geschwindigkeiten kommen und bei plötzlichen Änderungen der Bestandsdichte stark beschleunigen oder verzögern, was für den Bediener nicht komfortabel ist.

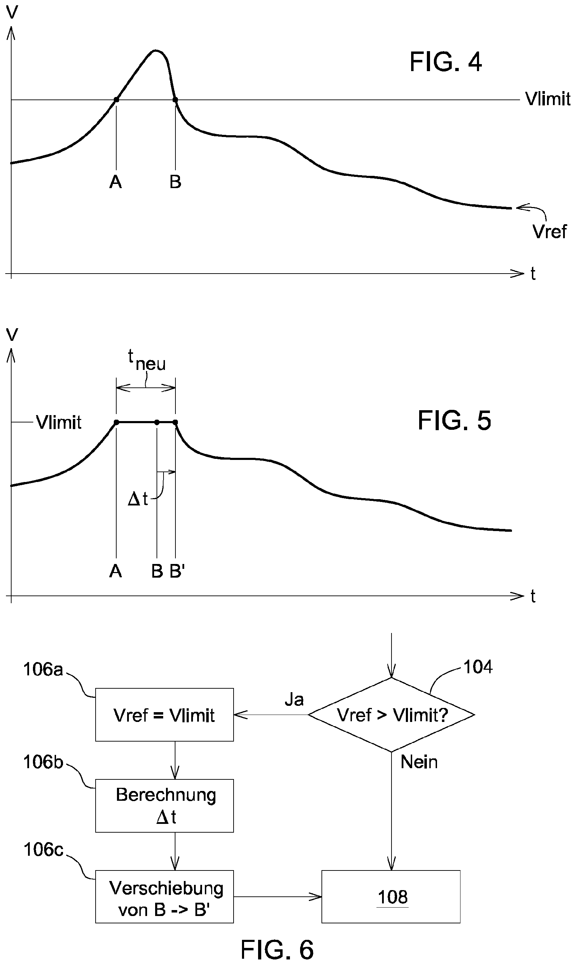

Im folgenden Schritt 104 wird abgefragt, ob jede der im Schritt 102 ermittelten Geschwindigkeiten größer als eine Grenzgeschwindigkeit ist, die fest vorgegeben sein und beispielsweise in der Größenordnung von 10 km/h liegen kann oder durch den Fahrhebel 44 vorgebbar sein kann. Ist das der Fall, folgt der Schritt 106, in dem eine Neuplanung des zeitlichen Verlaufs der Geschwindigkeiten erfolgt. Bei Aufruf des Schritts 106 liegt demnach eine Situation vor, wie sie in der Figur 4 schematisch dargestellt ist: Die geplante Geschwindigkeit v ref (t) überschreitet zum Zeitpunkt A einen vorgegebenen, oberen Grenzwert v limit und unterschreitet ihn wieder zu einem späteren Zeitpunkt B. Bei der Neuplanung im Schritt 106 wird daher die Geschwindigkeit v ref ab dem Zeitpunkt A auf den Wert v limit begrenzt (Schritt 106a in Figur 6) und die Beibehaltung dieser Geschwindigkeit über den Zeitpunkt B um die Zeit Δt hinaus bis zu einem Zeitpunkt B' verlängert, da der Mähdrescher 10 ja langsamer fahren muss, als ursprünglich geplant war. Demnach wird in einem Schritt 106b die Zeit Δt berechnet und in einem Schritt 106c der Zeitpunkt B' bestimmt. Ab dem Zeitpunkt B' wird dann wieder die Kurve aus Schritt 102 verwendet, jedoch um die Zeit At nach hinten verschoben. Auf den Schritt 106 bzw. 106 folgt der Schritt 108, ebenso wenn das Ergebnis des Schritts 104 negativ war.

Im Schritt 108 wird der Geschwindigkeitsverlauf, der Ergebnis des Schrittes 102 bzw. 106 ist, zur Berechnung der Beschleunigung a ref verwendet, indem die Geschwindigkeit zeitlich differenziert wird. Es folgt der Schritt 110, in dem abgefragt wird, ob der Absolutbetrag der Beschleunigung a ref größer als ein vorbestimmter Maximalwert a limit ist. Dieser Maximalwert wird derart gewählt, dass der Bediener des Mähdreschers 10 in seiner Kabine 35 keinen übermäßigen, unkomfortablen Beschleunigungen ausgesetzt wird. Ein derartiger Maximalwert kann z.B. 0,315 m/s² betragen oder einem anderen, insbesondere genormten Maximalwert entsprechen. Ergibt der Schritt 110, dass der Maximalwert a limit nicht überschritten wird, folgt der Schritt 112, in dem die in den vorherigen Schritten bestimmten Werte für v ref und a ref als Ausgangswert übernommen und an die Sollwertberechnungseinheit 66 und an den Subtrahierer 72 (Figur 2) übergeben werden. Auf den Schritt 112 folgt wieder der Schritt 102, jedoch für später anzusteuernde Geschwindigkeitswerte.

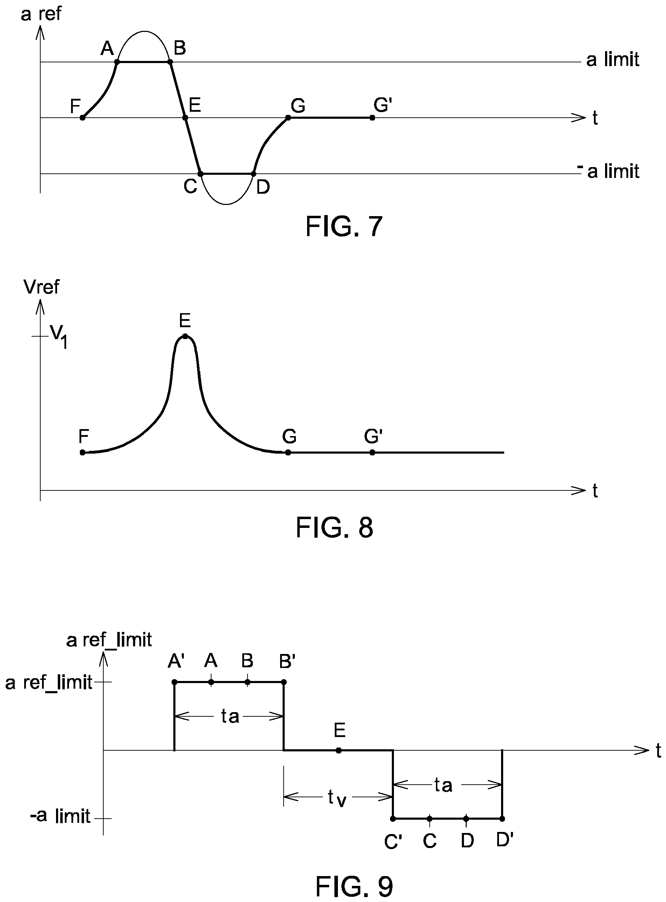

Ergibt sich hingegen im Schritt 110, dass der Betrag der Beschleunigung a ref größer als der Maximalwert ist, folgt der Schritt 114. Beim Aufruf des Schritts 114 liegt somit ein Verlauf der Beschleunigung vor, wie er beispielsweise in der Figur 7 dargestellt ist. Die Beschleunigung a ref kann bei plötzlich dünn werdendem Erntegutbestand 96 an einem Zeitpunkt A größer als der Maximalwert a limit werden und zu einem Zeitpunkt B wieder unter diesen Maximalwert hinuntergehen (wenn der Mähdrescher 10 seine Sollgeschwindigkeit erreicht hat oder der Bestand wieder dichter wird). Analog kann der Mähdrescher 10 ab einem Zeitpunkt E verzögern, wenn die Bestandsdichte ansteigt und zu einem Zeitpunkt C unterschreitet die (negative) Verzögerung den negativen Maximalwert a limit, während die Verzögerung zum Zeitpunkt D wieder den negativen Maximalwert a limit überschreitet. Dabei erhält man den in der Figur 8 dargestellten Geschwindigkeitsverlauf, bei dem die Geschwindigkeit v ref am Zeitpunkt F anfängt anzusteigen (entspricht dem Punkt vor A, an dem a ref in Figur 8 anfängt, von null abzuweichen), zum Zeitpunkt E am größten ist und den Wert v1 erreicht und danach wieder absinkt, um zum Zeitpunkt G (entspricht dem Punkt nach D, an dem a ref in Figur 8 wieder null ist) wieder den ursprünglichen Wert zu erreichen.

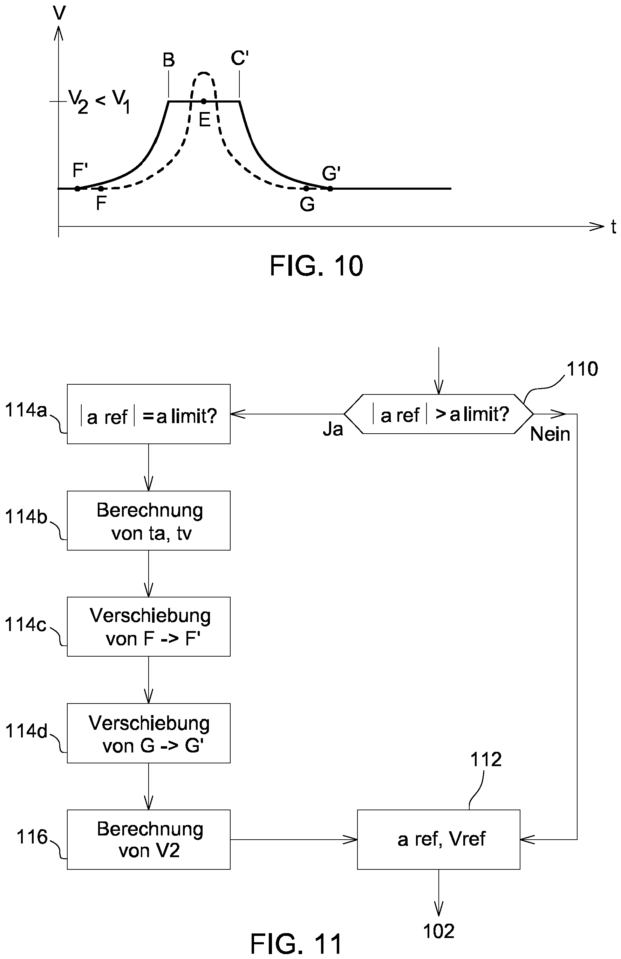

Die Vorgehensweise im Schritt 114 ist demnach derart, dass die Beschleunigung auf das Vorzeichen der geplanten Beschleunigung (+1 bei Beschleunigung, -1 bei Verzögerung) multipliziert mit der maximalen Beschleunigung a limit gesetzt wird (Schritt 114a in Figur 11) und die Zeitpunkte A und B nach vorn bzw. hinten auf Zeitpunkte A' und B' gelegt werden, damit die Beschleunigung a ref nicht den Maximalwert überschreitet, wie in der Figur 9 und der Figur 11 gezeigt. Dies gilt analog auch für die Zeitpunkte C und D, die auf Zeitpunkte C' und D' nach vorn und hinten gelegt werden, vgl. Figur 9. Die Beschleunigung wird zwischen den Zeitpunkten A' und B' auf den Maximalwert a limit gesetzt und zwischen den Zeitpunkten C' und D' auf den Minimalwert -a limit. Hierzu sei in der Figur 11 auf den Schritt 114b verwiesen, in dem einerseits Zeiten t a für die Beschleunigungs- und Verzögerungsphasen entsprechend der Maximalwerte bestimmt werden und andererseits eine Zeit t v für die Zeit mit nicht vorhandener Beschleunigung bestimmt werden. Diese Zeiten dienen in den Schritten 114c und 114d zur Verschiebung der Zeitpunkte F und G nach vorn bzw. hinten auf F' und G', wie in der Figur 10 dargestellt.

Da im Schritt 114 die Beschleunigungen gegenüber der ursprünglichen Planung modifiziert wurden, erfolgt im Schritt 116 auch eine Neuplanung der Geschwindigkeit. Hierzu sei auf die Figur 10 verwiesen. Der Beginn des Beschleunigungsvorgangs wurde von F auf F' vorverlegt und sein Ende von G auf G' nach hinten verlegt. Die ursprünglich geplante Kurve nach Figur 8 ist gestrichelt eingezeichnet. Der Zeitpunkt G' ist derart gewählt, dass nach der Neuplanung am Zeitpunkt G' genau die gleiche Wegstrecke zurückgelegt wurde, wie am Zeitpunkt G der ursprünglichen Planung.

Der Zeitpunkt G' kann durch zweifache zeitliche Integration der berechneten Geschwindigkeit über die Zeit berechnet werden. Im vorliegenden Fall ist die maximal erreichte Geschwindigkeit v2 kleiner als die nach Figur 8 ursprünglich erreichte maximal erreichte Geschwindigkeit v1. Das bedeutet, dass die Geschwindigkeitsvorgabesignale, die für nach dem Zeitpunkt G geplant waren, zeitlich später zur Anwendung kommen, da der neu geplante Vorgang (wegen der kleineren, neugeplanten Beschleunigungen und Geschwindigkeiten) zwischen den Zeitpunkten F' und G' zeitlich länger dauert als der ursprünglich geplante Vorgang zwischen den Zeitpunkten F und G. Auf den Schritt 116 folgt der Schritt 112.

Nach der Neuplanung könnte zwischen den Schritten 112 und 102 noch eine Überprüfung erfolgen, ob bei dem neugeplanten Geschwindigkeitsverlauf eine Überschreitung des maximalen Erntegutdurchsatzes überhaupt oder um ein (durch den Bediener oder herstellerseitig) vorgebbares Maß zu erwarten ist. Sollte das der Fall sein, würde die Neuplanung wiederholt werden, wobei die Geschwindigkeiten entsprechend zu reduzieren sind.

Es sei noch angemerkt, dass verschiedene Änderungen der erfindungsgemäßen Vorgehensweise denkbar sind. So sind die nach der Neuplanung resultierenden Beschleunigungsverläufe in der Figur 9 rechteckförmig. Anstelle dessen könnten Beschleunigungsverläufe der Figur 9 auch trapezförmig sein, d.h. der Absolutwert der Beschleunigung mit der Zeit linear ansteigen, bis der Punkt A' bzw. C' erreicht ist und am Punkt B' bzw. D' in gleicher Weise wieder absinken. Anstelle des linearen Anstiegs wären auch beliebige andere Verläufe denkbar, wie quadratische, logarithmische oder exponentielle Anstiege.

## Patentansprüche

1. Verfahren zur Geschwindigkeitskontrolle einer Erntemaschine (10), die mit einer Vortriebsgeschwindigkeit in einer Vorwärtsrichtung (V) über ein Feld bewegbar ist und dabei Erntegut aufnimmt, mit folgenden Schritten:
vorausschauendes Ermitteln der Dichte eines Erntegutbestands (96) auf dem Feld oder eines von der Dichte des Erntegutbestands (96) auf dem Feld abhängigen Wertes,
Vorausplanen eines Geschwindigkeitsvorgabesignals für die Erntemaschine im Sinne einer fortdauernden Einhaltung eines gewünschten Durchsatzes der Erntemaschine,
und Kontrolle der Geschwindigkeit der Erntemaschine basierend auf dem Geschwindigkeitsvorgabesignal ,
**dadurch gekennzeichnet, dass** beim Vorausplanen des Geschwindigkeitsvorgabesignals die Absolutbeträge der aus dem Geschwindigkeitsvorgabesignal resultierenden Beschleunigungen der Erntemaschine auf einen festgelegten Maximalwert begrenzt werden, und
dass das Vorausplanen des Geschwindigkeitsvorgabesignals einen ersten Schritt, in dem das Geschwindigkeitssignal nur basierend auf der Dichte des Erntegutbestands oder dem davon abhängigen Wert geplant wird und einen zweiten Schritt umfasst, in dem eine Neuplanung erfolgt, falls der Betrag der im ersten Schritt geplanten Beschleunigung der Erntemaschine den festgelegten Maximalwert übersteigt.

2. Verfahren nach Anspruch 1, wobei beim Vorausplanen des Geschwindigkeitsvorgabesignals eine Maximalgeschwindigkeit der Erntemaschine berücksichtigt wird.

3. Verfahren nach Anspruch 2, wobei das Vorausplanen des Geschwindigkeitsvorgabesignals einen Schritt umfasst, in dem eine Neuplanung erfolgt, falls die im ersten Schritt geplante Geschwindigkeit der Erntemaschine die festgelegte Maximalgeschwindigkeit der Erntemaschine übersteigt.

4. Verfahren nach einem der Ansprüche 1 bis 3, wobei das Vorausplanen des Geschwindigkeitsvorgabesignals ein zeitliches Verschieben einer Geschwindigkeitsänderung nach vorn oder hinten umfasst, um ein Überschreiten eines Maximalwerts der Beschleunigung und/oder Geschwindigkeit zu verhindern, wobei der Neuplanung zeitlich nachfolgende Geschwindigkeitsvorgabesignale zeitlich nach hinten verschoben werden.

5. Verfahren nach einem der Ansprüche 1 bis 4, wobei bei der Neuplanung eines ursprünglich eine maximale Beschleunigung oder Geschwindigkeit überschreitenden Geschwindigkeitssignals eine maximale Beschleunigung oder Geschwindigkeit verwendet wird.

6. Verfahren nach einem der Ansprüche 1 bis 5, wobei beim Vorausplanen des Geschwindigkeitsvorgabesignals die Bedingung berücksichtigt wird, dass ein Gutdurchsatz den gewünschten Durchsatz der Erntemaschine nie oder nicht um ein durch den Bediener oder herstellerseitig vorgebbares Maß überschreitet.

7. Anordnung zur Geschwindigkeitskontrolle einer Erntemaschine (10), die mit einer Vortriebsgeschwindigkeit in einer Vorwärtsrichtung (V) über ein Feld bewegbar ist und dabei Erntegut aufnimmt, mit:
einer Einrichtung, die zum vorausschauenden Ermitteln der Dichte des Erntegutbestandes (96) auf dem Feld oder eines von der Dichte des Erntegutbestandes (96) auf dem Feld abhängigen Wertes eingerichtet ist,
einer Planungseinrichtung (64), die zum Vorausplanen eines Geschwindigkeitsvorgabesignals für die Erntemaschine im Sinne einer fortdauernden Einhaltung eines gewünschten Durchsatzes der Erntemaschine betreibbar ist,
und Mitteln, die zur Kontrolle der Geschwindigkeit der Erntemaschine basierend auf dem Geschwindigkeitsvorgabesignal eingerichtet sind,
**dadurch gekennzeichnet, dass** die Planungseinrichtung (64) betreibbar ist, beim Vorausplanen des Geschwindigkeitsvorgabesignals die Absolutbeträge der aus dem Geschwindigkeitsvorgabesignal resultierenden Beschleunigungen der Erntemaschine auf einen festgelegten Maximalwert zu begrenzen,
und dass die Planungseinrichtung (64) betreibbar ist, einen ersten Schritt durchzuführen, in dem das Geschwindigkeitssignal nur basierend auf der Dichte des Erntegutbestands oder dem davon abhängigen Wert geplant wird und einen zweiten Schritt durchzuführen, in dem eine Neuplanung erfolgt, falls der Betrag der im ersten Schritt geplanten Beschleunigung der Erntemaschine den festgelegten Maximalwert übersteigt.

8. Anordnung nach Anspruch 7, wobei die Mittel zur Kontrolle der Geschwindigkeit der Erntemaschine eine Regelschaltung (74) umfassen, welcher von der Planungseinrichtung (64) ein Sollwert (V (t) ref) der Geschwindigkeit der Erntemaschine und von einem Geschwindigkeitssensor (60) ein Istwert der Geschwindigkeit der Erntemaschine zuführbar ist, und die Mittel zur Kontrolle der Geschwindigkeit der Erntemaschine betreibbar sind, dem Ausgangswert der Regelschaltung (74) einen Ausgangswert einer Sollwertberechnungseinheit (66) zu addieren, um die Fahrdynamik der Erntemaschine im Sinne einer Vorsteuerung zu berücksichtigen.

9. Erntemaschine mit einer Anordnung nach Anspruch 7 oder 8.

## Claims

1. Method for controlling the speed of a harvesting machine (10) which is movable in a forwards direction (V) over a field at a propulsion speed and, in the process, picks up crop, with the following steps:
predictively determining the density of a crop stand (96) on the field or of a value dependent on the density of the crop stand (96) on the field,
advanced planning of a speed specification signal for the harvesting machine with the effect of continuously maintaining a desired throughput of the harvesting machine,
and controlling the speed of the harvesting machine on the basis of the speed specification signal,
**characterized in that**, during the advanced planning of the speed specification signal, the absolute values of the harvesting-machine accelerations resulting from the speed specification signal are limited to a defined maximum value, and
**in that** the advance planning of the speed specification signal comprises a first step, in which the speed signal is planned only on the basis of the density of the crop stand or on the value dependent thereon, and a second step, in which new planning takes place if the value of the harvesting-machine acceleration planned in the first step exceeds the defined maximum value.

2. Method according to Claim 1, wherein, during the advance planning of the speed specification signal, a maximum speed of the harvesting machine is taken into consideration.

3. Method according to Claim 2, wherein the advanced planning of the speed specification signal comprises a step in which new planning takes place if the harvesting-machine speed planned in the first step exceeds the defined maximum speed of the harvesting machine.

4. Method according to one of Claims 1 to 3, wherein the advanced planning of the speed specification signal comprises moving a speed change forwards or backwards in time to prevent a maximum value of the acceleration and/or speed being exceeded, wherein speed specification signals following the new planning in time are moved back in time.

5. Method according to one of Claims 1 to 4, wherein a maximum acceleration or speed is used during the new planning of a speed signal that originally exceeds a maximum acceleration or speed.

6. Method according to one of Claims 1 to 5, wherein, during the advanced planning of the speed specification signal, the condition is taken into consideration that a crop throughput never exceeds the desired throughput of the harvesting machine or does not exceed same by an amount that can be specified by the operator or by the manufacturer.

7. Arrangement for controlling the speed of a harvesting machine (10) which is movable in a forwards direction (V) over a field at a propulsion speed and, in the process, picks up crop, with:
a device which is designed for predictively determining the density of the crop stand (96) on the field or of a value dependent on the density of the crop stand (96) on the field,
a planning device (64) which can be operated for advance planning of a speed specification signal for the harvesting machine with the effect of continuously maintaining a desired throughput of the harvesting machine,
and means which are designed for controlling the speed of the harvesting machine on the basis of the speed specification signal,
**characterized in that** the planning device (64) can be operated in order, during the advanced planning of the speed specification signal, to limit the absolute values of the harvesting-machine accelerations resulting from the speed specification signal to a defined maximum value,
and **in that** the planning device (64) can be operated in order to carry out a first step, in which the speed signal is planned only on the basis of the density of the crop stand or on the value dependent thereon, and in order to carry out a second step, in which new planning takes place if the value of the harvesting-machine acceleration planned in the first step exceeds the defined maximum value.

8. Arrangement according to Claim 7, wherein the means for controlling the speed of the harvesting machine comprise a control circuit (74) to which a desired value (V(t)ref) of the speed of the harvesting machine can be supplied by the planning device (64) and an actual value of the speed of the harvesting machine can be supplied by a speed sensor (60), and the means for controlling the speed of the harvesting machine can be operated to add a starting value of a desired value calculation unit (66) to the starting value of the control circuit (74) in order to take into consideration the travelling dynamics of the harvesting machine with the effect of a pre-control.

9. Harvesting machine with an arrangement according to Claim 7 or 8.

## Revendications

1. Procédé de contrôle de vitesse d'une moissonneuse (10) qui peut être déplacée sur un champ à une vitesse d'avancement en marche avant (V) tout en ramassant des produits de récolte, comprenant les étapes suivantes consistant à :
déterminer par anticipation la densité d'une quantité de produits de récolte (96) sur le champ ou une valeur dépendant de la densité de la quantité de produits de récolte (96) sur le champ,
planifier par anticipation un signal de spécification de vitesse pour la moissonneuse en termes de respect continu d'une capacité souhaitée de la moissonneuse,
et contrôler la vitesse de la moissonneuse sur la base du signal de spécification de vitesse,
**caractérisé en ce que** lors de la planification par anticipation du signal de spécification de vitesse, les valeurs absolues des accélérations de la moissonneuse résultant du signal de spécification de vitesse sont limitées à une valeur maximale fixée, et
**en ce que** la planification par anticipation du signal de spécification de vitesse comprend une première étape à laquelle le signal de vitesse est planifié uniquement sur la base de la densité de la quantité de produits de récolte ou de la valeur qui en dépend, et une deuxième étape à laquelle une nouvelle planification est effectuée si la valeur de l'accélération de la moissonneuse planifiée à la première étape dépasse la valeur maximale fixée.

2. Procédé selon la revendication 1, dans lequel une vitesse maximale de la moissonneuse est prise en compte pour la planification par anticipation du signal de spécification de vitesse.

3. Procédé selon la revendication 2, dans lequel la planification par anticipation du signal de spécification de vitesse comprend une étape à laquelle une nouvelle planification est effectuée si la vitesse de la moissonneuse planifiée à la première étape dépasse la vitesse maximale de la moissonneuse.

4. Procédé selon l'une quelconque des revendications 1 à 3, dans lequel la planification par anticipation du signal de spécification de vitesse comprend le fait d'avancer ou de retarder une variation de vitesse afin d'empêcher un dépassement d'une valeur maximale de l'accélération et/ou de la vitesse, des signaux de spécification de vitesse consécutifs dans le temps à la nouvelle planification étant retardés.

5. Procédé selon l'une quelconque des revendications 1 à 4, dans lequel une accélération ou vitesse maximale est utilisée lors de la nouvelle planification d'un signal de vitesse dépassant initialement une accélération ou vitesse maximale.

6. Procédé selon l'une quelconque des revendications 1 à 5, dans lequel, lors de la planification par anticipation du signal de spécification de vitesse, la condition est prise en compte qu'une quantité de produits ne dépasse jamais la quantité souhaitée de la moissonneuse ou ne la dépasse pas d'un degré prédéfinissable par l'opérateur ou le fabricant.

7. Agencement de contrôle de vitesse d'une moissonneuse (10) qui peut être déplacée sur un champ à une vitesse d'avancement en marche avant (V) tout en ramassant des produits de récolte, comprenant :
un dispositif qui est aménagé pour déterminer par anticipation la densité de la quantité de produits de récolte (96) sur le champ ou une valeur dépendant de la densité de la quantité de produits de récolte (96) sur le champ,
un dispositif de planification (64) qui peut être actionné pour planifier par anticipation un signal de spécification de vitesse pour la moissonneuse en termes de respect continu d'une quantité souhaitée de la moissonneuse,
et des moyens qui sont aménagés pour contrôler la vitesse de la moissonneuse sur la base du signal de spécification de vitesse,
**caractérisé en ce que** le dispositif de planification (64) peut être actionné, lors de la planification par anticipation du signal de spécification de vitesse, pour limiter à une valeur maximale fixée les valeurs absolues des accélérations de la moissonneuse résultant du signal de spécification de vitesse,
et **en ce que** le dispositif de planification (64) peut être actionné pour effectuer une première étape à laquelle le signal de vitesse est planifié uniquement sur la base de la densité de la quantité de produits de récolte ou de la valeur qui en dépend, et une deuxième étape à laquelle une nouvelle planification est effectuée si la quantité de l'accélération de la moissonneuse planifiée à la première étape dépasse la valeur maximale fixée.

8. Agencement selon la revendication 7, dans lequel les moyens de contrôle de la vitesse de la moissonneuse comprennent un circuit de régulation (74) auquel le dispositif de planification (64) peut fournir une valeur théorique (V(t)ref) de la vitesse de la moissonneuse, et auquel un capteur de vitesse (60) peut fournir une valeur réelle de la vitesse de la moissonneuse, et les moyens de contrôle de la vitesse de la moissonneuse peuvent être actionnés pour additionner à la valeur de départ du circuit de régulation (74) une valeur de départ d'une unité de calcul de valeur théorique (66) afin de tenir compte de la dynamique de conduite de la moissonneuse en termes de commande pilote.

9. Moissonneuse comprenant un agencement selon la revendication 7 ou 8.
